# EUROPEAN PATENT SPECIFICATION

(11) **EP 3 068 271 B1**
(45) Date of publication and mention of the grant of the patent: **12.08.2020**
(21) Application number: 14792494.8
(22) Date of filing: 31.10.2014
(51) Int. Cl.: A47J 27/62, F24C 7/08, H05B 1/02, H05B 6/68

(54) **SMART COOKING APPARATUS AND METHOD**
INTELLIGENTE KOCHVORRICHTUNG UND VERFAHREN
APPAREIL ET PROCÉDÉ DE CUISSON INTELLIGENTE

(30) Priority: 14.11.2013 EP 13192829
(43) Date of publication of application: 21.09.2016
(73) Proprietor: Koninklijke Philips N.V., 5656 AG Eindhoven (NL)
(72) Inventor: DE SAMBER, Marc Andre, 5656 AE Eindhoven (NL)
(74) Representative: Uittenbroek, Arie Leendert
(86) International application number: PCT/EP2014/073406
(87) International publication number: WO 2015/071112

(56) References cited:
- EP-A1- 1 384 951
- EP-A1- 1 622 425
- DE-A1-102008 041 394
- FR-A1- 2 873 188
- US-A1- 2002 059 175

## Description

### FIELD OF THE INVENTION

The invention relates to a method for preparing a food product and a cooking apparatus for use in a method for preparing a food product.

### BACKGROUND OF THE INVENTION

Electronic cooking apparatus with control means are known in the art. US2013125763, for instance, describes a control device for a cooking appliance, the cooking appliance including a cooking chamber designed to receive at least one predetermined food or a plurality of ingredients of a predetermined recipe, a heating component for heating the cooking chamber, the control device including a control unit arranged to determine at least one combination of predetermined cooking parameters as a function at least of the specific surface area of the at least one unitary element of the at least one predetermined food or the at least one ingredient of the plurality of ingredients of the predetermined recipe inserted into the cooking chamber of the cooking appliance, the specific surface area being estimated from descriptive parameters of the at least one unitary element of the predetermined food or the at least one ingredient from among the plurality of ingredients of the predetermined recipe.

EP1622425 discloses a cooking apparatus that uses information from barcodes provided on food to prepare said food. The information may include cooking time, cooking method, power level, number of servings.

US2002059175 describes a food information management system including a food database containing food cooking conditions for cooking foods, and nutritive ingredients, energy-producing values and weight of foods, and information storage mediums. Each information storage medium is attached to a food package containing a processed food and storing food information including food ID information specifying a food. When cooling the processed food, the food ID information stored in the food information storage medium is read by a read means. Food information about a food specified by the food ID information is retrieved from the food database, an output means receives the food information, and a display means displays the food information.

### SUMMARY OF THE INVENTION

Making cooking more easily (with less need for intervention/attention) is a consumer need. Further, there is a desire to allow tuning the cooked food to the desire of the user. However, as the same product may vary much on all kind of factors, the properties of the cooked food product may vary.

Hence, it is an aspect of the invention to provide an alternative method for preparing a food product from a food component in a cooking process, which preferably further at least partly obviates one or more of above-described drawbacks and/or which may allow better control of the cooking process and/or a better optimization of the cooking process. It is further an aspect of the invention to provide an alternative cooking apparatus, with which especially the method as described herein may be performed, which preferably further at least partly obviates one or more of above-described drawbacks and/or which may allow better control of the cooking process and/or a better optimization of the cooking process.

It is found that there is large progress in food quality models. These food quality models allow predicting food (e.g. vegetables) quality evolution over time, depending on initial (as harvested) quality parameters and external influences (such as time, temperature, humidity, presence of O₂, CO₂, ethylene (for ripening), etc.). Also for meat the property influencing parameters are well understood (e.g. the effect of pH of meat in the first hours after slaughter determining the tenderness of the meat). At the same time, sensor developments, resulting in accurate, smart (with digital output) and cost effective, are ongoing. Combining these elements (like input parameters, external influencing factors (and sensing these) and mathematical models) may allow to predict evolution of food quality (including shelf life), even if limited sensing information is available (as a result of mathematical models).

Herein, it is proposed to use (amongst others) the above methodology for use in the food preparation (=cooking) process. By doing so, and tuning the cooking parameters (such as temperature, time, temperature-time profile, acidity, mechanical actuation (e.g. stirring), etc.), e.g. at least partly independent of the input parameters of the ingredient one can then tailor the cooking process such that a predicted (and preferred) cooking result can be achieved by a 'simple' programming step. As the input parameters may obviously be of large influence of the proceeding cooking process, these pre-cooking parameters (herein also indicated as "historical information") are inserted in the system. For example this could be done by loading these from a smart sensor label on the food packaging, from loading from the supplier data based (e.g. using an App), or any of such input parameters. Alternatively or additionally some input parameters might be measured by the smart cooker itself. Hence, if desired, irrespective, or substantially irrespective of the food component(s) background, a food product may be obtained in the cooking process, which (final) food product has food product features that may thus substantially not depend (if desired) from the background of the food components.

Hence, in a first aspect the invention provides a method for preparing a food product from a food component in a cooking process, wherein the method comprises: acquiring food component input information concerning the food component; and controlling a cooking process parameter of the cooking process as function of (i) the food component input information and (ii) a cooking process model, wherein the food component input information especially comprises historical information concerning the food component, and wherein the cooking process model includes a relation between the food component input information and the cooking process parameter of the cooking process for preparing the food product from the food component. Further, also user preference input information may be used to control the cooking process parameter, which is further explained below. In yet a further aspect, the invention also provides a cooking apparatus for preparing a food product from a food component in a cooking process, the cooking apparatus comprising a cooking chamber and a control unit, wherein the control unit is configured to control a cooking process parameter of the cooking process in the cooking chamber as function of (i) a food component input information and (ii) a cooking process model, wherein the food component input information especially comprises historical information concerning the food component, and wherein the cooking process model includes a relation between the food component input information and the cooking process parameter of the cooking process for preparing the food product from the food component. The cooking apparatus will in general have a cooking chamber that can be closed with a cooking apparatus closure.

With such method and such apparatus, one may relatively easily prepare via an optimized cooking process a cooked food product. Further, one may tune the cooking process such that an optimized cooked food product may be obtained. Dependent upon (historical) parameters that may influence the cooked food product, one may now control the cooking process, which is with the presently known processes and apparatus not possible. Further, the method and apparatus may allow, based on the herein described food component input information, an automatic or semi-automatic tuning of the cooking process, which is advantageous for the person that controls the process. Hence, more freedom may be obtained and better optimized cooking processes and cooked food products maybe obtained. Therefore, with the method and/or with the cooking apparatus, having acquired the food component input information and on the basis of the cooking process model, the method and/or cooking apparatus may autonomously prepare the food product from the food component.

As indicated above, the method is a method for preparing a food product from a food component and relates to a cooking process, wherein said food product is prepared from the food component. The term "food component" may also refer to a plurality of food components. Hence, the method herein described may also relate to a method for preparing a food product from a plurality of food components in a cooking process. In general, more than one food component may be present, as even water, or another aqueous liquid, as e.g. boiling liquid, or oil or fat as baking liquid, or oil as frying liquid, may (in embodiments) be considered a food component. However, the term food component herein especially relates to at least a first food component selected from the group consisting of meat, a vegetable, a fruit and a cereal. Therefore, with the method and/or with the cooking apparatus, having acquired the food component(s) input information and on the basis of the cooking process model, the method and/or cooking apparatus may autonomously prepare the food product from the food component(s).

Here, the term "meat" may refer to the biological term, i.e. one or more of meat, fish, mollusks, etc. The term "vegetable" especially refers to the biological term, i.e. one or more of broccoli, cauliflower, globe artichokes, kale, collard greens, spinach, arugula, beet greens, bok choy, chard, choi sum, turnip greens, endive, lettuce, mustard greens, watercress, garlic chives, gai lan, leeks, Brussels sprouts, Kohlrabi, galangal, and ginger, celery, rhubarb, cardoon, Chinese celery, asparagus, bamboo shoots, potatoes, Jerusalem artichokes, sweet potatoes, taro, and yams, soybean, mung beans, urad, and alfalfa, carrots, parsnips, beets, radishes, rutabagas, turnips, and burdocks, onions, shallots, garlic, but also tomatoes, cucumbers, squash, zucchinis, pumpkins, peppers, eggplant, tomatillos, chayote, okra, breadfruit, avocado, pods, and optionally also seeds such as corn, green beans and snow peas, etc. The term "fruit" may also especially refer to the biological term, i.e. one or more of apple, apricot, banana, breadfruit, blackberry, blackcurrant, blueberry, currant, cherry, date, dragon fruit, fig, gooseberry, grape, grapefruit, guava, kiwi fruit, kumquat, legume, lemon, lime, lychee, mango, melon (e.g. including watermelon), honeydew, nectarine, orange, mandarine, tangerine, papaya, passion fruit, peach, plum, pineapple, pomegranate, pomelo, raspberry, rambutan, star fruit, strawberry, etc. Herein, the term "cereal" especially refers to one or more of maize (corn), rice, wheat, buckwheat, barley, sorghum, millet, oats, rye, etc.

Herein, the term "cooking process" especially refers to a process wherein one or more of meat, a vegetable, a fruit and a cereal is cooked (as first food components)), especially in combination with one or more of an aqueous liquid, oil, fat, etc. The term "aqueous liquid" may refer to one or more of water, wine, beer, milk (including one or more of cow milk, sheep milk, goat milk, horse milk, soy milk, etc.), etc. The cooking process may include a boiling liquid, a frying liquid, (baking) fat, etc. However, the cooking process may also include a process substantially without such liquid. Hence, the cooking process may in embodiments also refer to a microwave process or a process in a stove. The phrase "preparing a food product from a food component" may, as indicated above, include a process wherein such food product is made from a plurality of food components. The term "food product" may refer to a "single" food product such as a (cooked) cauliflower, cooked meat, cooked potatoes, fried potatoes, baked fish, etc. However, the term "food product" may in embodiments also refer to a multi-food product such e.g. a dish with a layered food product like lasagna, a vegetable dish, a layered cake, etc. Especially, the food product is selected from the group consisting of a soup, a sauce, a cake, and a product consisting of at least 50 dry wt.% of one or more of meat, vegetable, fruit and cereal, like at least 75 wt.%. Especially, the cooking process involves a cooking liquid such as an aqueous liquid, fat or oil. Further, the cooking process is especially executed in a cooking chamber of a cooking apparatus; see also below for specific embodiments. The term "cooking" may especially refer to the practice of preparing a food product for consumption from a food component with the use of heat. The term "cooking" may for instance refer to roasting, baking, boiling, frying, smoking, etc. Specific examples are e.g. grilling, broiling, flash baking, blanching, poaching, pressure cooking, steaming, deep frying, etc.

A feature of the method of the invention is the acquisition of food component input information. This especially refers to information that is used to control the cooking process. This food component input information may include all types of information like type of food component, weight of food component, etc., but especially at least includes historical information. It has been found, see also above, that historical information also influences the characteristics of the food component, and thus also the final food product. Introduction in a cooking chamber of 1 kg of tomatoes to process, together with other food components, into a soup, may lead to different soups when all conditions are the same, dependent upon the country of origin, the date of harvesting and/or the length and conditions of storage and transport. Here, the present invention takes into account such variations, as the cooking process is as function of (i) a food component input information and (ii) a cooking process model, wherein the food component input information comprises historical information concerning the food component, and wherein the cooking process model includes a relation between the food component input information and a cooking process parameter.

The term "cooking process parameter" may also refer to a plurality of cooking process parameters. Hence, the term "cooking process parameter" may for instance refer to one or more of a cooking temperature, a cooking time, a cooking pressure, and a predefined cooking scheme including at least a time-temperature relation ("cooking scheme"). Especially, temperature is relevant. Hence, especially the cooking process parameter includes a cooking temperature and optionally one or more selected from the group comprising (i) a cooking time, (ii) a cooking pressure, and (iii) a predefined cooking scheme including at least a time-temperature relation. To this end, the cooking apparatus may include one or more devices to control such cooking parameter, like one or more of a temperature control unit (such as a heating unit), clock, a timer, a pressure control unit, etc. (herein also indicated as "influence unit(s)").

The historical information may relate to e.g. place of growth or breeding, way of growing or breeding, way of processing, storage conditions and time, transporting conditions and time, etc. Hence, in a specific embodiment, the historical information comprises one or more selected from the group consisting of: (i) growing information of the food component (like time, season, year, climate, weather, etc.), (ii) harvesting information of the food component (like the way of harvesting, time of harvesting, etc.), (iii) processing information of the food component (like how raw material is processed into the food component and/or how the food component is improved or enriched), (iv) transporting information of the food component (like duration of transport, transport conditions, etc.), and (v) storage information of the food component including duration of storage and storage conditions. This may e.g. refer to fruit, vegetables, cereals, etc. In yet a further embodiment, wherein the food component comprises an animal meat product, and wherein the historical information comprises one or more selected from the group consisting of (i) animal keeping information (like way of keeping of the animal, alter of the animal, etc.), (ii) animal to food component processing information (like way of fishing, way of slaughtering, way of processing into food component, etc.), (iii) transporting information of the animal (like duration of transport, transport conditions, etc.), (iv) transporting information of the food component (like duration of transport, transport conditions, etc.), and (v) storage information of the food component including duration of storage and storage conditions. Again, as indicated above, meat may refer to flesh, fish, etc. In an embodiment, the food component information may comprise information concerning the region of origin of the food component (geographical information). In yet another embodiment, the food component information comprises information concerning the region of origin of the food component and at least (another) historical food component information, such as one or more of the above-mentioned types of information like growing information, harvesting information, animal keeping information, (animal to food component) processing information, transporting information (of the animal and/or the food component), storage information, etc. The historical information may relate to an entire period from generation up to substantially the cooking process, but may also refer to a much shorter period, such as the information whether or not the food component has been stored (at reduced temperature), etc.

The acquisition of the food component input information may be done in several ways. In an embodiment, the food component comprises a label, like a sticker with information, on the food component, or a packaged food component with information on the package, or information associated with a container containing the food component (like a label associated with a crate), or otherwise a label associated with the food component. For instance, the label may include written information. However, the label may also include a bar code. The label may also include a sign (representing information). The label may also include an RFID chip. The label may also include a sensor that displays information, like e.g. a food sensor which is indicative of the freshness of the food component, such as an intelligent packaging sensor for a packaged food component. The information may e.g. be acquired by a human who literally reads the information and informs the apparatus via a (graphical) user interface. However, the information may also be acquired by scanning a label, which may include optical scanning like reading a bar code or a QR code or a symbol, etc. The food component input information may be contained in or on the label, but the food component input information may also be stored in a remote library ("in the cloud") with the label having information that refers to this (food component input information in the) remote library. The term "associated with" may e.g. refer to "attached to".

Likewise, all kind of options are available for retrieving the input from the model on the cooking process. The model information may be stored in a memory of the cooking apparatus. However, the model information may also be stored remote, like on a local computer, with which the cooking apparatus may (wireless) communicate, or a remote computer ("in the cloud")(which the cooking apparatus may (wireless) communicate). Alternatively or additionally, updates of model information may be downloaded and stored in a memory.

The processing of the model information, based on the above-mentioned relation, into a cooking process parameter, may be done with a local processor, included in the apparatus, or in a remote processor, like on a local computer, with which the cooking apparatus may (wireless) communicate, or a remote computer ("in the cloud")(which the cooking apparatus may (wireless) communicate). For instance, an App may be applied, which scans the label information, and which, based on remote information on the cooking model, provides the cooking process parameter for the process and instructs the cooking apparatus. Though in principle even the instructions to the cooking apparatus may be done manually, in general this will be done automatically, i.e. the cooking process is automatically controlled on the basis of the food component input information and the cooking process model. In a specific embodiment, (a) the acquisition of the food component input information comprises (i) reading information from an information label associated with the food component and (ii) processing said information into food component input information based on information in a remote database, and wherein (b) the control of the cooking process parameter comprises processing the food component input information into the cooking process parameter based on model information concerning the relation between the food component input information and the cooking process parameter in a remote database. Therefore, with the method and/or with the cooking apparatus, having acquired the food component(s) input information and on the basis of the cooking process model, the processor may autonomously prepare the food product from the food component(s).

In a specific embodiment, the food component input information comprises storage information of the food component, wherein the method further comprises acquiring said storage information from one or more of (i) an information label associated with the food component and (ii) a storage unit comprising a communication unit configured to provide storage information about storage in said storage unit. Hence, not only a label may e.g. be scanned, but the method and cooking apparatus may also use communication with other devices, such as a (local) storage unit. Such storage unit may e.g. (also) be a smart unit, configured to detect introduction of a food component and configured to detect removal of a food component, and configured to provide (wireless) information about storage conditions, like time and temperature, of the food component, to the cooking apparatus. In yet a further specific embodiment, the cooking apparatus may (thus) further comprise an information acquisition unit, wherein the control unit is further configured to the acquire food component input information via the acquisition unit, and wherein the information acquisition unit comprises one or more of (i) a user interface, (ii) a reading unit for reading information from an information label associated with the food component, and (iii) an information sensor unit for wireless receiving food component input information. Such acquisition unit may read for instance the label, such as a bar code, a QR code or a sign.

As will be clear to a person skilled in the art, the cooking model may also include data concerning the type of food product. Hence, in general the method will also include acquisition of information concerning the type of food product that is to be prepared based on the food component. To this end, also the user interface maybe used. Hence, the cooking apparatus will in general comprise a user interface, such as a graphical user interface, including e.g. a remote user interface, such as via a local computer, such as a smartphone (including an iPhone). For instance, in an embodiment after acquiring food component information (including thus optionally information concerning a plurality of food components), a food product, or a plurality of possible food products, may be suggested on a screen, such as e.g. a graphical user interface, (of) which (one) can then be selected by the user. The (selection of the) type of food product may in embodiments be considered essential information, however, optionally other information may be acquired as well, such as the desired starting time of the cooking process, the desired cooking time (in general within boundaries that may be set by the cooking process model), the taste of the food product (such as spicy, well-done, tender, sweet, salty, etc.), the texture of the food product, etc. Hence, in a further embodiment, the method comprises acquiring food component input information concerning the food component; acquiring user preference input information; controlling the cooking process parameter of the cooking process as function of (i) the food component input information, (ii) user preference input information, and (iii) the cooking process model, wherein the food component input information comprises historical information concerning the food component, and wherein the cooking process model includes a relation between the food component input information, user preference input information, and the cooking process parameter of the cooking process for preparing the food product from the food component. For instance, the user preference input information may include one or more of a food product characteristic, a cooking process start, a cooking process time, a food component characteristic, and (optionally) a further cooking process characteristic. The further cooking process parameter may for instance include one or more of type of water (hard, soft, etc.), type of cooking liquid, type of baking or frying aid such as fat or oil, etc. Therefore, with the method and/or with the cooking apparatus, having acquired the food component(s) input information and other information, such as user preference input information, and on the basis of the cooking process model, the method and/or cooking apparatus may autonomously prepare the food product from the food component(s).

As indicated above, a cooking apparatus may be applied. This cooking apparatus may especially be configured to execute the method as described herein. The cooking apparatus may comprise a cooking chamber, wherein the cooking process may be executed. The cooking apparatus may, as indicated above, include a sensor configured to read information from an information label associated with the food component. The cooking apparatus may also include one or more sensors to control the cooking process, such as by monitoring the food component or the (evolving) food product. Hence, in a specific embodiment, a cooking apparatus is applied comprising a cooking chamber, wherein the cooking apparatus further comprises a sensor (herein also indicated as sensor unit), configured to measure within the cooking chamber one or more of a cooking process characteristic, a food component characteristic, a food product characteristic, and optionally a further cooking process characteristic, and to generate a corresponding sensor signal, wherein the method further comprises controlling the cooking process parameter of the cooking process as function of the sensor signal. A cooking process characteristic may include one or more of time, temperature, pressure, etc. A food product characteristic may refer to one or more of presence, content, temperature, texture, color, etc. of the food product. A food component characteristic may refer to one or more of presence, content, temperature, texture, color, etc. of the food component. An optional further cooking process characteristic may relate to one or more of pH, conductivity, presence and/or concentration of side products such as C, CO₂, hydrocarbons, etc.

It further appears that the individual characteristics of the food component, which may, as indicated above, have impact on the final food product, and which, as indicated above, may have a historical background, may further tuned with the introduction of other food components, such as acid, wine, beer, a spice, etc. In this way, e.g. tough meat can be made tenderer. Hence, if desired, historical influence that is considered undesired, may be compensated, and historical influence that is desired can be kept or even further strengthened.

With the present invention it is e.g. possible to get substantially the same beans based food product, independent whether the beans are fresh beans or beans that have been stored in cooling storage for instance half a year, or e.g. beans from South America or beans from Africa. The cooking process parameters can be tuned based on the food component input information (such as location or harvesting time or storage conditions, etc.), to obtain substantially the same beans based food product. Further, for instance during cooking sugar and/or citric acid may be added to a meat product, such as chicken, to speed up the cooking process and/or make the chicken more tender, respectively. Additionally or alternatively, during a baking process of poultry, at the end some beer maybe added as additional food component for improving the appearance (brown crispy skin) of the poultry. As additional food component, also a "softener" may be added, having marinade-like properties. Such softener may include an acid liquid, such as wine or acetic acid. In this way, tenderness may be tuned, based on incoming quality of meat which appears to depend on first hours/day after slaughtering the animal (of which the meat is derived). In another example, new potatoes may be cooked with a high heating ramp or dosage to the cooking chamber when water is hot, or even boiling, whereas the cooking process may include a low heating ramp or a relative cold initial cooking period when older potatoes are being cooked. With respect to fruit, it may also apply that storage may have impact on the fruit. For instance for applies, the sugar, starch, and acid content of the apple changes upon storage. Dedicated temperature-time profiles may compensate for differences between fruit as function of the storage conditions. Further, as during storage, or as a function of harvesting or processing conditions, the texture of a food component may change, cooking process conditions and optionally the further food component may be used to provide food products that have substantially the same features. Of course, in other embodiments the uses may deliberately choose for specific features of the (final) food product.

To this end, the method, and also the cooking process model, may further take into account the introduction of a further food component (and its influence on the food product). Hence, in a specific embodiment the cooking apparatus may further comprise a container unit configured to contain a further food component, wherein dosage of the further food component to the cooking chamber is controllable, wherein the control unit is further configured to control dosage of the further food component to the cooking chamber, and wherein the cooking process model includes a relation between the food component input information, the further food component, and the cooking process parameter of the cooking process for preparing the food product from the food component and optionally the further food component. Likewise, the method may also include (in those embodiments wherein a cooking apparatus is applied comprising a cooking chamber, wherein the apparatus further comprises a container unit configured to contain a further food component) controlling dosage of the further food component to the cooking chamber, and wherein the cooking process model includes a relation between the food component input information, the further food component, and the cooking process parameter of the cooking process for preparing the food product from the food component and optionally the further food component. Hence, the cooking apparatus may be configured that dosage of the further food component to the cooking chamber is controllable. In yet a further specific embodiment, the use may be able to influence a property of the food product (see also above under preference input information). This user preference may also have impact on the use of the further food component. Hence, in a specific embodiment the method further comprises controlling dosage of the further food component to the cooking chamber as function of user preference input information. Therefore, with the method and/or with the cooking apparatus, having acquired the food component(s) input information and on the basis of the cooking process model, the method and/or cooking apparatus may autonomously prepare the food product from the food component(s) and provide e.g. the desired quality or type of food, by also controlling dosage of the further food component. The further food component may for instance include an acid liquid, e.g. to improve tenderness of older meat.

Hence, the present invention may especially allow use of a cooking apparatus, as especially described herein, to execute the method for preparing a food product from a food component in a cooking process, as especially described herein, wherein based on historical information of the food component before use in the cooking process, a user preference input information, and the dosage of a further food component, the cooking process is executed.

The term "substantially" herein, such as in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'. The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of' but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The invention further applies to a device comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Furthermore, some of the features can form the basis for one or more divisional applications.

### BRIEF DESCRIPTION OF THE DRAWINGS

Embodiments of the invention will now be described, by way of example only, with reference to the accompanying schematic drawings in which corresponding reference symbols indicate corresponding parts, and in which:

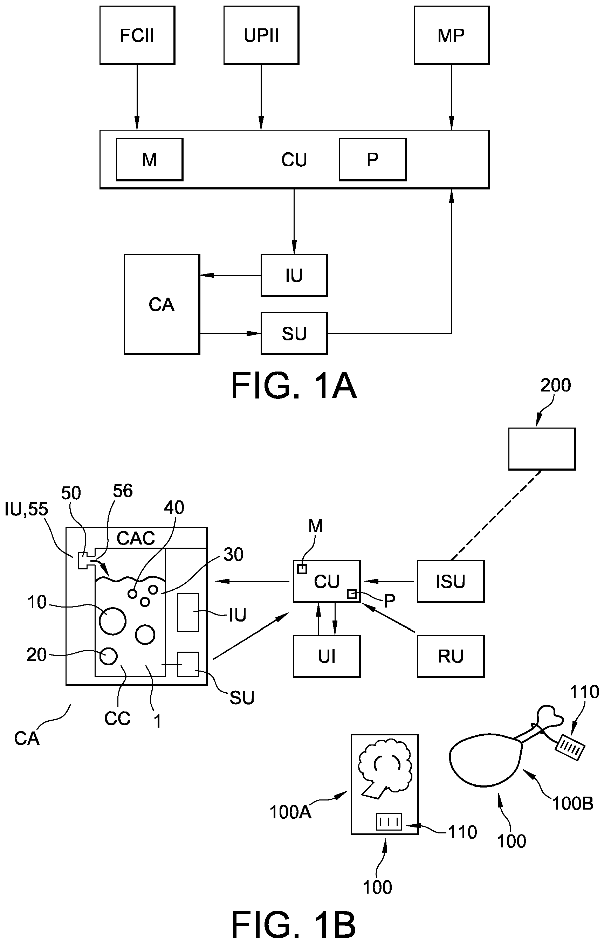

Figs. 1a-1b very schematically depict some aspects of the invention.

The drawings are not necessarily on scale.

### DETAILED DESCRIPTION OF THE EMBODIMENTS

Fig. 1a schematically depicts some aspects of the invention. As indicated above, food component input information concerning a food component may be acquired. Food component input information is indicated with reference FCII. Food component input information may be gathered in different ways (see above, and also below). Optionally, user preference input information may be acquired. This user preference input information is indicated with reference UPII. Optionally, also other information may be acquired, but not to complicate the model, this is not depicted. The food component input information (FCII) and the optional user preference input information UPII is processed in a control unit CU. Note that the control unit may comprise a plurality of control units and/or may have different functionalities at different locations. For instance, part of the processing is done locally, and part is done remote. The control unit CU may comprise a temporary and/or permanent memory; memory is indicated with reference M. further, the control unit may comprises processor P (like a micro processor). Based on a cooking process model (MP; model parameters), the control unit CU can control a cooking apparatus CA. To influence the cooking process in the cooking apparatus, an influence unit IU may influence or control the cooking process. Such influence unit IU may for instance be a heater. Further, optionally the cooking process may be monitored with one or more sensors. To this end, also a sensor unit SU may be available. The sensor unit may e.g. include one or more of a temperature sensor and a conductivity sensor. By way of example, some information routes are indicated by arrows. However, other or additional information routes may also be possible.

Via different ways the cooking process can be controlled and the cooking apparatus may be designed in different ways. Fig. 1b very schematically depicts an embodiment, wherein the cooking apparatus CA comprises a cooking chamber CC. Further the cooking chamber CC can be closed with a coking apparatus closure CAC. In the cooking chamber CC, one or more food components may be present, here indicated with references 10, 20, 30, 40 and 50, though more or less components may be available. The sensor unit SU may be integrated in the cooking apparatus CA. Further, one or more influence units may be integrated in the cooking apparatus. In a specific embodiment, the cooking apparatus comprises an influence unit IU comprising a reservoir 55 that can be controlled, such that dosage from a food component (here by way of example food component 50) can be controlled, via an opening 56 (such as a controllable opening). Information about user preferences and/or food component input information may be acquired via a user interface UI and/or a reading unit RU, respectively. The reading unit RU may comprise an optical scanner or an RFID scanner, etc. The user interface UI may be a graphical user interface. The reading unit may e.g. be able to read a label 110 from a food product 100. Here, by way of example a packaged cauliflower 100A and a chicken piece 100B are depicted. In general, there will be at least one influence unit IU that is configured to heat the cooking chamber CC.

Further, optionally an information sensor unit ISU may be available, which may be configured to receive information from another device 200, such as a storage device. Here, by for the sake of clarity the control unit CU, the user interface UI, the reading unit RU and the information sensor unit ISU are depicted as separate components, but one or more of these may be integrated in the cooking apparatus

In a specific embodiment, as minimum following requirements are needed:
The apparatus needs a minimum set of sensors that can monitor the progress of the food preparation. In principle a timer (often already available) and a temperature sensor could be a first function add-on, as time + temperature obviously already determine largely the cooking progress. In the (micro) processor data storage and calculation power (e.g. for running the cooking models) is required. Also the micro must be programmable (via an input UI) by the user to load the requested cooking result. A data input interface is required for loading the pre-cooking parameters. That might be a 'manual' key board interface or (better) an autonomous data reading system (e.g. wireless, App based, etc.). As next to input properties also amounts of ingredients are important, a (manual or automated) measurement system might be added as well. In the heart of the functionality is the cooking model that predicts and steers the cooking processes based on the input parameters of the ingredients, possibly including in-line sensed properties and process parameters during the cooking process, and the programmed (wanted) cooking result. Obviously the hardware must allow for sufficiently accurate cooking process control and steering (e.g. temperature, time, etc.).

## Claims

1. A method for preparing a food product (1) from a food component (10) in a cooking process, wherein the method comprises:
- acquiring food component input information concerning the food component;
- controlling a cooking process parameter of the cooking process as function of (i) the food component input information and (ii) a cooking process model, wherein the cooking process model includes a relation between the food component input information and the cooking process parameter of the cooking process for preparing the food product from the food component,
**characterised in that**,
the food component input information comprises historical information concerning the food component, wherein the historical information comprises one or more selected from the group consisting of: (i) growing information of the food component, (ii) harvesting information of the food component, (iii) processing information of the food component, (iv) transporting information of the food component, and (v) storage information of the food component including duration of storage and storage conditions; or
wherein the food component comprises an animal meat product, and wherein the historical information comprises one or more selected from the group consisting of (i) animal keeping information, (ii) animal to food component processing information, (iii) transporting information of the animal, (iv) transporting information of the food component, and (v) storage information of the food component including duration of storage and storage conditions.

2. The method according to claim 1, wherein (a) the acquisition of the food component input information comprises (i) reading information from an information label associated with the food component and (ii) processing said information into food component input information based on information in a remote database, and wherein (b) the control of the cooking process parameter comprises processing the food component input information into the cooking process parameter based on model information concerning the relation between the food component input information and the cooking process parameter in a remote database.

3. The method according to any one of the preceding claims, comprising:
- acquiring food component input information concerning the food component;
- acquiring user preference input information;
- controlling the cooking process parameter of the cooking process as function of (i) the food component input information, (ii) user preference input information, and (iii) the cooking process model, wherein the food component input information comprises historical information concerning the food component, and wherein the cooking process model includes a relation between the food component input information, user preference input information, and the cooking process parameter of the cooking process for preparing the food product from the food component, wherein the cooking process parameter includes a cooking temperature and optionally one or more selected from the group comprising (i) a cooking time, (ii) a cooking pressure, and (iii) a predefined cooking scheme including at least a time-temperature relation.

4. The method according to claim 3, wherein the user preference input information includes one or more of a food product characteristic, a cooking process start, a cooking process time, a food component characteristic, and a further cooking process characteristic.

5. The method according to any one of the preceding claims, wherein the method comprises a method for preparing a food product from a plurality of food components in a cooking process, including (i) a food component selected from the group consisting of meat, a vegetable, a fruit and a cereal, and (ii) a cooking liquid.

6. The method according to any one of the preceding claims, wherein a cooking apparatus is applied comprising a cooking chamber, wherein the cooking apparatus further comprises a sensor, configured to measure within the cooking chamber one or more of a cooking process characteristic, a food component characteristic, a food product characteristic, and optionally a further cooking process characteristic, and to generate a corresponding sensor signal, wherein the method further comprises controlling the cooking process parameter of the cooking process as function of the sensor signal.

7. The method according to any one of the preceding claims, wherein a cooking apparatus is applied comprising a cooking chamber, wherein the apparatus further comprises a container unit configured to contain a further food component, wherein the method further comprises controlling dosage of the further food component to the cooking chamber, and wherein the cooking process model includes a relation between the food component input information, the further food component, and the cooking process parameter of the cooking process for preparing the food product from the food component and optionally the further food component.

8. The method according to claims 3 and 7, wherein the method further comprises controlling dosage of the further food component to the cooking chamber as function of user preference input information.

9. The method according to any of the preceding claims, wherein the food component input information comprises storage information of the food component, and wherein the method further comprises acquiring said storage information from one or more of (i) an information label associated with the food component and (ii) a storage unit comprising a communication unit configured to provide storage information about storage in said storage unit.

10. The method according to any of the preceding claims, wherein the cooking process comprises one or more of roasting, baking, boiling, frying, smoking, grilling, broiling, flash baking, blanching, poaching pressure cooking, steaming, and deep frying.

11. A cooking apparatus (CA) for preparing a food product from a food component in a cooking process, the cooking apparatus comprising a cooking chamber (CC) and a control unit (CU), wherein the control unit is configured to control a cooking process parameter of the cooking process in the cooking chamber as function of (i) a food component input information and (ii) a cooking process model, wherein the cooking process model includes a relation between the food component input information and the cooking process parameter of the cooking process for preparing the food product from the food component **characterized in that**,
the food component input information comprises historical information concerning the food component including duration of storage and storage conditions,
wherein the historical information comprises one or more selected from the group consisting of: (i) growing information of the food component, (ii) harvesting information of the food component, (iii) processing information of the food component, (iv) transporting information of the food component, and (v) storage information of the food component including duration of storage and storage conditions; or
wherein the food component comprises an animal meat product, and wherein the historical information comprises one or more selected from the group consisting of (i) animal keeping information, (ii) animal to food component processing information, (iii) transporting information of the animal, (iv) transporting information of the food component, and (v) storage information of the food component.

12. The cooking apparatus according to claim 11, further comprising an information acquisition unit, wherein the control unit is further configured to the acquire food component input information via the acquisition unit, and wherein the information acquisition unit comprises one or more of (i) a user interface (UI), (ii) a reading unit (RU) for reading information from an information label associated with the food component, and (iii) an information sensor unit for wireless receiving food component input information.

13. The cooking apparatus according to any one of claims 11-12, further comprising a container unit configured to contain a further food component, wherein dosage of the further food component to the cooking chamber is controllable, wherein the control unit is further configured to control dosage of the further food component to the cooking chamber, and wherein the cooking process model includes a relation between the food component input information, the further food component, and the cooking process parameter of the cooking process for preparing the food product from the food component and optionally the further food component.

14. The cooking apparatus according to any one of claims 11-13, wherein the cooking process comprises one or more of roasting, baking, boiling, frying, smoking, grilling, broiling, flash baking, blanching, poaching pressure cooking, steaming, and deep frying.

15. Use of a cooking apparatus according to any one of claims 11-14 to execute the method for preparing a food product from a food component in a cooking process, wherein based on historical information of the food component before use in the cooking process, a user preference input information, and the dosage of a further food component, the cooking process is executed.

## Patentansprüche

1. Verfahren zur Herstellung eines Lebensmittelprodukts (1) aus einer Lebensmittelkomponente (10) in einem Kochprozess, wobei das Verfahren umfasst:
- Erfassen von Lebensmittelkomponente-Eingabeinformationen bezüglich der Lebensmittelkomponente;
- Steuern eines Kochprozessparameters des Kochprozesses als Funktion von (i) den Lebensmittelkomponente-Eingabeinformationen und (ii) einem Kochprozessmodell, wobei das Kochprozessmodell eine Beziehung zwischen den Lebensmittelkomponente-Eingabeinformationen und dem Kochprozessparameter des Kochprozesses zum Zubereiten des Lebensmittelprodukts aus der Lebensmittelkomponente enthält, **dadurch gekennzeichnet, dass**
die Lebensmittelkomponente-Eingabeinformationen historische Informationen bezüglich der Lebensmittelkomponente umfassen,
wobei die historischen Informationen eine oder mehrere Informationen ausgewählt aus der Gruppe bestehend aus: (i) Wachstumsinformationen der Lebensmittelkomponente, (ii) Ernteinformationen der Lebensmittelkomponente, (iii) Verarbeitungsinformationen der Lebensmittelkomponente, (iv) Transportinformationen der Lebensmittelkomponente und (v) Lagerungsinformationen der Lebensmittelkomponente einschließlich Lagerungsdauer und Lagerbedingungen umfassen; oder
wobei die Lebensmittelkomponente ein tierisches Fleischprodukt umfasst und wobei
die historischen Informationen eine oder mehrere Informationen ausgewählt aus der Gruppe bestehend aus (i) Tierhaltungsinformationen, (ii) Informationen zur Verarbeitung des Tieres zu Lebensmittelkomponente, (iii) Transportinformationen des Tieres, (iv) Transportinformationen der Lebensmittelkomponente und (v) Lagerinformationen der Lebensmittelkomponente, einschließlich Lagerungsdauer und Lagerbedingungen, umfassen.

2. Verfahren nach Anspruch 1, wobei (a) die Erfassung der Lebensmittelkomponente-Eingabeinformationen umfasst (i) das Lesen der Informationen von einem Informationsetikett, das der Lebensmittelkomponente zugeordnet ist, und (ii) die Verarbeitung dieser Informationen zu Lebensmittelkomponente-Eingabeinformationen basierend auf Informationen in einer entfernten Datenbank, und wobei (b) die Steuerung des Kochprozessparameters die Verarbeitung der Lebensmittelkomponente-Eingabeinformationen in den Kochprozessparameter basierend auf Modellinformationen bezüglich der Beziehung zwischen den Lebensmittelkomponente-Eingabeinformationen und dem Kochprozessparameter in einer entfernten Datenbank umfasst.

3. Verfahren nach einem der vorhergehenden Ansprüche, umfassend:
- Erfassen von Lebensmittelkomponenten- Eingabeinformationen bezüglich der Lebensmittelkomponente;
- Erfassen von Eingabeinformationen zu den Benutzerpräferenzen;
- Steuern des Kochprozessparameters des Kochprozesses als Funktion von (i) Lebensmittelkomponente-Eingabeinformationen, (ii) Eingabeinformationen zu den Benutzerpräferenzen und (iii) dem Kochprozessmodell, wobei die Lebensmittelkomponente-Eingabeinformationen historische Informationen bezüglich der Lebensmittelkomponente umfassen, und wobei das Kochprozessmodell eine Beziehung zwischen den Lebensmittelkomponente-Eingabeinformationen, den Eingabeinformationen zu den Benutzerpräferenzen und dem Kochprozessparameter des Kochprozesses zum Zubereiten des Lebensmittelprodukts aus der Lebensmittelkomponente enthält, wobei der Kochprozessparameter eine Kochtemperatur und gegebenenfalls einen oder mehreren Parametern ausgewählt aus der Gruppe bestehend aus (i) einer Kochzeit, (ii) einem Kochdruck und (iii) einem vordefinierten Kochschema enthaltend das mindestens eine Zeit-Temperatur-Beziehung umfasst.

4. Verfahren nach Anspruch 3, wobei die Eingabeinformationen zu den Benutzerpräferenzen eine oder mehrere von einer Lebensmittel-Produktcharakteristik, einem Kochprozessstart, eine Kochprozesszeit, einer Charakteristik der Lebensmittelkomponente und einer weiteren Charakteristik des Kochprozess umfassen.

5. Verfahren nach einem der vorhergehenden Ansprüche, wobei das Verfahren ein Verfahren zum Herstellen eines Lebensmittelprodukts aus einer Vielzahl von Lebensmittelkomponenten in einem Kochprozess umfasst, einschließlich (i) einer Lebensmittelkomponente, ausgewählt aus der Gruppe bestehend aus Fleisch, Gemüse, Obst und Getreide und (ii) eine Kochflüssigkeit.

6. Verfahren nach einem der vorhergehenden Ansprüche, wobei eine Kochvorrichtung angewendet wird, die eine Kochkammer umfasst, wobei die Kochvorrichtung ferner einen Sensor umfasst, der konfiguriert ist, um innerhalb der Kochkammer eine oder mehrere zwischen einer Charakteristik des Kochprozesses, einer Charakteristik der Lebensmittelkomponente, einer Charakteristik des Lebensmittelprodukts und gegebenenfalls einer weiteren Charakteristik des Kochprozesses zu messen und zur Erzeugung eines entsprechenden Sensorsignals, wobei das Verfahren ferner die Steuerung des Kochprozessparameters des Kochprozesses als Funktion des Sensorsignals umfasst.

7. Verfahren nach einem der vorhergehenden Ansprüche, wobei eine Kochvorrichtung angewendet wird, die eine Kochkammer umfasst, wobei die Vorrichtung ferner eine Behältereinheit umfasst, die konfiguriert ist, um eine weitere Lebensmittelkomponente zu enthalten, wobei das Verfahren ferner die Steuerung der Dosierung der weiteren Lebensmittelkomponente in die Kochkammer umfasst, und wobei das Kochprozessmodell eine Beziehung zwischen den Lebensmittelkomponente-Eingabeinformationen, der weiteren Lebensmittelkomponente und dem Kochprozessparameter des Kochprozesses zum Zubereiten des Lebensmittelprodukts aus der Lebensmittelkomponente und gegebenenfalls der weiteren Lebensmittelkomponente enthält.

8. Verfahren nach den Ansprüchen 3 und 7, wobei das Verfahren ferner die Steuerung der Dosierung der weiteren Lebensmittelkomponente in die Kochkammer als Funktion der Eingabeinformationen zu den Benutzerpräferenzen umfasst.

9. Verfahren nach einem der vorhergehenden Ansprüche, wobei die Lebensmittelkomponente-Eingabeinformation Lagerungsinformationen der Lebensmittelkomponente umfasst und wobei das Verfahren ferner enthält die Erfassung der Lagerungsinformationen von einem oder mehreren von (i) einem Informationsetikett, das der Lebensmittelkomponente zugeordnet ist und (ii) einer Lagerungseinheit, die eine Kommunikationseinheit umfasst, die konfiguriert ist, um Lagerungsinformationen über die Lagerung in der Lagerungseinheit bereitzustellen.

10. Verfahren nach einem der vorhergehenden Ansprüche, wobei das Kochverfahren eine oder mehrere von Rösten, Backen, Sieden, Braten, Räuchern, Grillen, Brennen, Blitzbacken, Blanchieren, pochierte Druckkochen, Dämpfen und Frittieren umfasst.

11. Kochvorrichtung (CA) zum Zubereiten eines Lebensmittelprodukts aus einer Lebensmittelkomponente in einem Kochprozess, wobei die Kochvorrichtung eine Kochkammer (CC) und eine Steuereinheit (CU) umfasst, wobei die Steuereinheit konfiguriert ist, um ein Kochprozessparameter des Kochprozesses in der Kochkammer als Funktion von (i) einer Lebensmittelkomponente-Eingabeinformation und (ii) einem Kochprozessmodell zu steuern, wobei das Kochprozessmodell eine Beziehung zwischen der Lebensmittelkomponente-Eingabeinformation und dem Kochprozessparameter des Kochprozesses zur Herstellung des Lebensmittelprodukts aus der Lebensmittelkomponente enthält,
**dadurch gekennzeichnet, dass**
die Lebensmittelkomponente-Eingabeinformationen historische Informationen bezüglich der Lebensmittelkomponente einschließlich der Lagerdauer und der Lagerbedingungen umfassen,
wobei die historischen Informationen eine oder mehrere Informationen ausgewählt aus der Gruppe bestehend aus:
(i) Wachstumsinformationen der Lebensmittelkomponente, (ii) Ernteinformationen der Lebensmittelkomponente, (iii) Verarbeitungsinformationen der Lebensmittelkomponente, (iv) Transportinformationen der Lebensmittelkomponente und (v) Lagerungsinformationen der Lebensmittelkomponente einschließlich Lagerungsdauer und Lagerbedingungen umfassen; oder
wobei die Lebensmittelkomponente ein tierisches Fleischprodukt umfasst und wobei
die historischen Informationen eine oder mehrere Informationen ausgewählt aus der Gruppe bestehend aus (i) Tierhaltungsinformationen, (ii) Informationen zur Verarbeitung des Tieres zu Lebensmittelkomponente, (iii) Transportinformationen des Tieres, (iv) Transportinformationen der Lebensmittelkomponente und (v) Lagerinformationen der Lebensmittelkomponente, umfassen.

12. Kochvorrichtung nach Anspruch 11, ferner umfassend eine Informationserfassungseinheit, wobei die Steuereinheit ferner konfiguriert ist, um Lebensmittelkomponente-Eingabeinformationen über die Erfassungseinheit zu erfassen, und wobei die Informationserfassungseinheit eine oder mehrere von (i) einer Benutzerschnittstelle (UI), (ii) einer Leseeinheit (RU) zum Lesen von Informationen von einem Informationsetikett, das der Lebensmittelkomponente zugeordnet ist, und (iii) einer Informationssensoreinheit zum drahtlosen Empfangen von Lebensmittelkomponente-Eingabeinformationen umfasst.

13. Kochvorrichtung nach einem der Ansprüche 11 bis 12, ferner umfassend eine Behältereinheit, die konfiguriert ist, um eine weitere Lebensmittelkomponente zu enthalten, wobei die Dosierung der weiteren Lebensmittelkomponente in die Kochkammer steuerbar ist, wobei die Steuereinheit weiter konfiguriert ist, um die Dosierung der weiteren Lebensmittelkomponente in die Kochkammer zu steuern, wobei das Kochprozessmodell eine Beziehung zwischen den Eingabeinformationen der Lebensmittelkomponente, der weiteren Lebensmittelkomponente und dem Kochprozessparameter des Kochprozesses zum Zubereiten des Lebensmittelprodukts aus der Lebensmittelkomponente und optional der weiteren Lebensmittelkomponente enthält.

14. Kochvorrichtung nach einem der Ansprüche 11 bis 13, wobei das Kochverfahren eine oder mehrere von Rösten, Backen, Sieden, Braten, Räuchern, Grillen, Brennen, Blitzbacken, Blanchieren, pochierte Druckkochen, Dämpfen und Frittieren umfasst.

15. Verwendung einer Kochvorrichtung nach einem der Ansprüche 11 bis 14 zur Durchführung des Verfahrens zur Herstellung eines Lebensmittelprodukts aus einer Lebensmittelkomponente in einem Kochprozess, wobei basierend auf historischen Informationen der Lebensmittelkomponente vor der Verwendung in dem Kochprozess, auf Eingabeinformationen zu den Benutzerpräferenzen und auf der Dosierung einer weiteren Lebensmittelkomponente, wird der Kochprozess ausgeführt.

## Revendications

1. Procédé de préparation d'un produit alimentaire (1) d'un composant alimentaire (10) dans un processus de cuisson, dans lequel le procédé comprend:
- l'acquisition d'informations d'entrée du composant alimentaire concernant le composant alimentaire;
- le contrôle d'un paramètre de processus de cuisson du processus de cuisson en fonction (i) des informations d'entrée du composant alimentaire et (ii) d'un modèle de processus de cuisson, où le modèle de processus de cuisson comprend une relation entre les informations d'entrée du composant alimentaire et le paramètre de processus de cuisson du processus de cuisson pour préparer le produit alimentaire à partir du composant alimentaire,
**caractérisé en ce que**,
les informations d'entrée du composant alimentaire comprennent des informations historiques concernant le composant alimentaire, où les informations historiques comprennent une ou plusieurs informations sélectionnées dans le groupe constitué de: (i) des informations sur la croissance du composant alimentaire, (ii) des informations sur la récolte du composant alimentaire, (iii) des informations sur le traitement du composant alimentaire, (iv) des informations sur le transport du composant alimentaire, et (v) des informations sur le stockage du composant alimentaire y compris la durée de stockage et les conditions de stockage; ou
dans lequel le composant alimentaire comprend un produit de viande animale, et dans lequel les informations historiques comprennent une ou plusieurs informations sélectionnés dans le groupe comprenant (i) des informations sur l'entretien des animaux, (ii) des informations sur le traitement de l'animal à le composant alimentaire, (iii) des informations sur le transport de l'animal, (iv) des informations sur le transport du composant alimentaire, et (v) des informations sur le stockage du composant alimentaire y compris la durée de stockage et les conditions de stockage.

2. Procédé selon la revendication 1, dans lequel (a) l'acquisition des informations d'entrée du composant alimentaire comprend (i) la lecture d'informations d'une étiquette d'informations associée au composant alimentaire et (ii) le traitement desdites informations en informations d'entrée du composant alimentaire sur la base des informations dans une base de données à distance, et dans lequel (b) le contrôle du paramètre de processus de cuisson comprend le traitement des informations d'entrée du composant alimentaire dans le paramètre de processus de cuisson sur la base d'informations de modèle concernant la relation entre les informations d'entrée du composant alimentaire et le paramètre de processus de cuisson dans une base de données à distance.

3. Procédé selon l'une quelconque des revendications précédentes, comprenant:
- l'acquisition d'informations d'entrée du composant alimentaire concernant le composant alimentaire;
- l'acquisition d'informations d'entrée de préférence de l'utilisateur;
- le contrôle du paramètre de processus de cuisson du processus de cuisson en fonction (i) des informations d'entrée du composant alimentaire, (ii) des informations d'entrée de préférence de l'utilisateur, et (iii) du modèle de processus de cuisson, où les informations d'entrée du composant alimentaire comprennent des informations historiques concernant le composant alimentaire, et où le modèle de processus de cuisson comprend une relation entre les informations d'entrée du composant alimentaire, les informations d'entrée de préférence de l'utilisateur, et le paramètre de processus de cuisson du processus de cuisson pour préparer le produit alimentaire à partir du composant alimentaire, où le paramètre de processus de cuisson comprend une température de cuisson et facultativement un ou plusieurs paramètres sélectionnés dans le groupe comprenant (i) un temps de cuisson, (ii) une pression de cuisson, et (iii) un schéma de cuisson prédéfini comprenant au moins une relation temps-température.

4. Procédé selon la revendication 3, dans lequel les informations d'entrée de préférence de l'utilisateur comprennent un ou plusieurs parmi une caractéristique du produit alimentaire, un début du processus de cuisson, un temps de processus de cuisson, une caractéristique du composant alimentaire, et une autre caractéristique du processus de cuisson.

5. Procédé selon l'une quelconque des revendications précédentes, dans lequel le procédé comprend un procédé pour préparer un produit alimentaire à partir d'une pluralité de composants alimentaires dans un processus de cuisson, comprenant (i) un composant alimentaire sélectionné dans le groupe constitué de viande, un légume, un fruit et une céréale, et (ii) un liquide de cuisson.

6. Procédé selon l'une quelconque des revendications précédentes, dans lequel on utilise un appareil de cuisson comprenant une chambre de cuisson, dans lequel l'appareil de cuisson comprend en outre un capteur, configuré pour mesurer dans la chambre de cuisson une ou plusieurs parmi une caractéristique du processus de cuisson, une caractéristique du composant alimentaire, une caractéristique du produit alimentaire, et facultativement une autre caractéristique du processus de cuisson, et pour générer un signal de capteur correspondant, où le procédé comprend en outre le contrôle du paramètre de processus de cuisson du processus de cuisson en fonction du signal de capteur.

7. Procédé selon l'une quelconque des revendications précédentes, dans lequel on utilise un appareil de cuisson comprenant une chambre de cuisson, dans lequel l'appareil comprend en outre une unité de récipient configurée pour contenir un autre composant alimentaire, où le procédé comprend en outre le contrôle du dosage de l'autre composant alimentaire dans la chambre de cuisson, et où le modèle de processus de cuisson comprend une relation entre les informations d'entrée du composant alimentaire, l'autre composant alimentaire, et le paramètre de processus de cuisson du processus de cuisson pour préparer le produit alimentaire à partir du composant alimentaire et facultativement l'autre composant alimentaire.

8. Procédé selon les revendications 3 et 7, dans lequel le procédé comprend en outre le contrôle du dosage de l'autre composant alimentaire dans la chambre de cuisson en fonction des informations d'entrée de préférence de l'utilisateur.

9. Procédé selon l'une quelconque des revendications précédentes, dans lequel les informations d'entrée du composant alimentaire comprennent des informations de stockage du composant alimentaire, et où le procédé comprend en outre l'acquisition desdites informations de stockage d'une ou plusieurs parmi (i) une étiquette d'informations associée au composant alimentaire et (ii) une unité de stockage comprenant une unité de communication configurée pour fournir des informations de stockage concernant le stockage dans ladite unité de stockage.

10. Procédé selon l'une quelconque des revendications précédentes, dans lequel le processus de cuisson comprend un ou plusieurs parmi rôtissage, cuisson au four, ébullition, friture, fumage, grillage, cuisson au gril, cuisson rapide au four, blanchiment, cuisson pouchée sous pression, cuisson à la vapeur, et friture profonde.

11. Appareil de cuisson (CA) pour préparer un produit alimentaire à partir d'un composant alimentaire dans un processus de cuisson, l'appareil de cuisson comprenant une chambre de cuisson (CC) et une unité de commande (CU), où l'unité de commande est configurée pour commander un paramètre de processus de cuisson du processus de cuisson dans la chambre de cuisson en fonction (i) d'une information d'entrée du composant alimentaire et (ii) d'un modèle de processus de cuisson, où le modèle de processus de cuisson comprend une relation entre les informations d'entrée du composant alimentaire et le paramètre de processus de cuisson du processus de cuisson pour préparer un produit alimentaire à partir du composant alimentaire **caractérisé en ce que**,
les informations d'entrée du composant alimentaire comprennent des informations historiques concernant le composant alimentaire y compris la durée de stockage et les conditions de stockage,
dans lequel les informations historiques comprennent une ou plusieurs informations sélectionnées dans le groupe constitué de: (i) des informations sur la croissance du composant alimentaire, (ii) des informations sur la récolte du composant alimentaire, (iii) des informations sur le traitement du composant alimentaire, (iv) des informations sur le transport du composant alimentaire, et (v) des informations sur le stockage du composant alimentaire y compris la durée de stockage et les conditions de stockage; ou
dans lequel le composant alimentaire comprend un produit de viande animale, et dans lequel les informations historiques comprennent une ou plusieurs informations sélectionnés dans le groupe comprenant (i) des informations sur l'entretien des animaux, (ii) des informations sur le traitement de l'animal à le composant alimentaire, (iii) des informations sur le transport de l'animal, (iv) des informations sur le transport du composant alimentaire, et (v) des informations sur le stockage du composant alimentaire.

12. Appareil de cuisson selon la revendication 11, comprenant en outre une unité d'acquisition d'informations, où l'unité de commande est en outre configurée pour acquérir les informations d'entrée du composant alimentaire via l'unité d'acquisition, et où l'unité d'acquisition d'informations comprend une ou plusieurs parmi (i) une interface utilisateur (UI), (ii) une unité de lecture (RU) pour lire des informations d'une étiquette d'informations associée au composant alimentaire, et (iii) une unité de capteur d'informations pour la réception sans fil des informations d'entrée du composant alimentaire.

13. Appareil de cuisson selon l'une quelconque des revendications 11-12, comprenant en outre une unité de récipient configurée pour contenir un autre composant alimentaire, où le dosage de l'autre composant alimentaire dans la chambre de cuisson est contrôlable, où l'unité de commande est en outre configurée pour contrôler le dosage de l'autre composant alimentaire dans la chambre de cuisson, et où le modèle de processus de cuisson comprend une relation entre les informations d'entrée du composant alimentaire, l'autre composant alimentaire, et le paramètre de processus de cuisson du processus de cuisson pour préparer le produit alimentaire à partir du composant alimentaire et facultativement l'autre composant alimentaire.

14. Appareil de cuisson selon l'une quelconque des revendications 11-13, dans lequel le processus de cuisson comprend un ou plusieurs parmi rôtissage, cuisson au four, ébullition, friture, fumage, grillage, cuisson au gril, cuisson rapide au four, blanchiment, cuisson pouchée sous pression, cuisson à la vapeur, et friture profonde.

15. Utilisation d'un appareil de cuisson selon l'une quelconque des revendications 11-14 pour l'exécution du procédé de préparation d'un produit alimentaire à partir d'un composant alimentaire dans un processus de cuisson, où le processus de cuisson est exécuté sur la base d'informations historiques du composant alimentaire avant utilisation dans le processus de cuisson, d'une information d'entrée de préférence de l'utilisateur, et du dosage d'un autre composant alimentaire.
